(19)

Europäisches
Patentamt
European
Patent Office
Office européen
des brevets

(11)  EP 4 549 744 A1

(12)  **EUROPEAN PATENT APPLICATION**

(43) Date of publication:
**07.05.2025  Bulletin 2025/19**

(51) International Patent Classification (IPC):
*F04F 5/16* (2006.01)     *F04D 25/08* (2006.01)
*F04D 29/52* (2006.01)

(21) Application number: **24209069.4**

(22) Date of filing: **25.10.2024**

(52) Cooperative Patent Classification (CPC):
**F04F 5/16; F04D 25/08; F04D 29/522;** Y02T 10/12

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **02.11.2023   CN 202322967797 U**

(71) Applicant: **Gmerit Holdings Ltd
Foshan City, Guangdong Province (CN)**

(72) Inventor: **Zhang, Weiwei
Foshan City (CN)**

(74) Representative: **RVDB Nantes
2, rue Crucy
CS 60515
44005 Nantes Cedex 1 (FR)**

Remarks:
Amended claims in accordance with Rule 137(2)
EPC.

(54)  **BLOWING STRUCTURE AND BLADELESS FAN INCLUDING SAID BLOWING STRUCTURE**

(57)     A blowing structure for a bladeless fan comprises two air delivery ducts (1) and a connector (2), wherein the two air delivery ducts (1) are symmetrically arranged at two bottom ends of the connector (2), and wherein the air delivery ducts (1) have dolphin-like outer contour. Each air delivery duct (1) is provided with an internal air chamber (101), a bottom air inlet and a side-wall air slot (103), wherein the air inlet (102), the air chamber (101) and the air slot (103) are connected to each other.

FIG.1

## Description

Technical background

The present application relates to the field of household appliances, in particular to a blowing structure and a bladeless fan including such a blowing structure.

Background

In recent years, the bladeless fans have become increasingly popular, and the consumers have also increasing demands regarding the performance of the bladeless fans.

A bladeless fan generally comprises a fan and an air delivery duct. A motor-driven impeller, installed in the fan, is usually used to blow air into the air supply duct, and the air is sent out through the outlet on the air supply duct.

At present, most of the common air delivery ducts for bladeless fans are annular on the market. Performances of annular air delivery ducts in the existing technology have been greatly optimized, so that their performances are far superior to performances of traditional fans, i.e. fans with blades.

Alternatively to annular air supply duct, it is known for a bladeless fan to supply air through a tubular air delivery duct extending in the vertical direction. However, conventional bladeless fans, in particular those equipped with tubular air delivery ducts, have some limitations and do not achieve satisfactory performances. The existing tubular air delivery duct is generally designed only according to the aesthetic appearance of the bladeless fan, without consideration for user experience, technical capabilities or performances of the fan. It has been observed that, due to an increase in turbulent kinetic energy on the inner wall of the air supply duct of a conventional tubular air delivery duct, airflow is negatively impacted and undesirable high noise is caused, thereby causing airflow energy loss and limiting air supply distance, distance along which air is blown.

Summary of the invention

An object of the present invention is to solve at least one of the disadvantages or deficiencies of the prior art, as described above and further below.

Another object of the present invention is to provide a blowing structure (or blowing device) for a bladeless fan achieving high performances with limited noise.

Another object of the present invention is to provide a blowing structure (or blowing device), and a bladeless fan comprising such a blowing structure, allowing improved performances, in particular in terms of airflow efficiency, air supply distance and noise reduction.

To this end, the present invention provides a blowing structure (or blowing device) and a bladeless fan comprising said blowing structure, which advantageously limit the aerodynamic noise of the air delivery ducts and the airstream turbulence at the air outlets by weakening the pressure pulsation and turbulent pulsation on the surface of the air delivery ducts and at the air outlets, and the interference impact between the internal outlet air flow and the external inlet air flow.

According to a first aspect, the invention provides a blowing structure (or blowing device) comprising two air delivery ducts and a connector; wherein the two air delivery ducts are symmetrically arranged on two bottom ends of the connector; wherein the air delivery ducts have dolphin-like outer contour; each air delivery duct being provided with an internal air chamber, a bottom air inlet and a side-wall air slot, wherein the air inlet, the air chamber and the air slot are connected to each other.

In a particular example, a maximum length L and a maximum width H of the internal air chamber of each air delivery duct satisfy the following relationship: $0.2 \leq H/L \leq 0.5$

In a particular example, the edge (or end) with the air slot of each air delivery duct defines an included angle within a range of 4° to 20°.

In a particular example, the air slot is 5-20 mm wide.

In a particular example, the blowing structure further comprises a plurality of air guide plates which are separately installed in the air slot in vertical direction to divide the air slot into a plurality of air outlets.

In a particular example, the cross-sectional area of each internal air chamber in horizontal direction is configured so that it vertically decreases from bottom to top.

In a particular example, the blowing structure further comprises two mounting parts configured to connect the blowing structure to a fan, wherein each one of said mounting parts is installed at the bottom of a respective one of the air delivery ducts.

In a particular example, the air delivery duct, the connector and the mounting part are integrated.

In a particular example, a weight reducing chamber is formed in the connector.

According to a second aspect of the invention, a bladeless fan comprises a fan and the above-defined blowing structure, wherein the outlet of the fan is connected to the air inlets of the blowing structure.

The technical solution provided by the present invention allows for at least the advantages described herebelow.

The air delivery ducts have dolphin-shaped outer outline, which advantageously allows reducing the aerodynamic noise of the air delivery ducts and the airstream turbulence at the air outlets by weakening the pressure pulsation and turbulent pulsation on the surface of the air delivery ducts and at the air outlets, and the interference impact between the internal outlet air flow and the external inlet air flow.

In a particular embodiment, the ratio of maximum width to maximum length of the air chamber can be advantageously optimized to achieve even more stable flow by the rectification of the air flow in the air chamber for a long enough time, and avoid the flow loss caused by more vortex.

In a particular embodiment, the included angle of the end with the air slot can be advantageously optimized to further reduce the turbulence noise of the air slot by more uniformly accelerating the air flow in the air chamber, and reducing the turbulence of the air slot.

Description of the drawings

Other characteristics and advantages of the present invention will appear from the following description made with reference to the accompanying drawings which show embodiments having no limiting character. In the figures:

- Figure 1 shows a stereo-gram of a blowing structure according to a particular embodiment of the invention;
- Figure 2 shows a main view of the blowing structure according to a particular embodiment of the invention;
- Figure 3 shows A-A cross-section of the blowing structure shown in Figure 2 according to a particular embodiment of the invention;
- Figure 4 shows B-B cross-section of the blowing structure shown in Figure 2 according to a particular embodiment of the invention;

Where the following reference signs are used: Air delivery duct 1, air chamber 101, air inlet 102, and air outlet 103; Connector 2, weight reducing chamber 201; Mounting part 3.

Description of particular embodiments of the invention

Embodiments according to the present invention are described in detail below with reference to the figures. In the figures given for the embodiments, identical or similar reference signs indicate identical or similar elements or elements with identical or similar functions. The embodiments and their figures are illustrative and only used to explain the present invention and cannot be deemed to limit the present invention.

In the following detailed description, numerous specific details are set forth by way of examples in order to provide a thorough understanding of the relevant teachings. However, it should be apparent to those skilled in the art that the present teachings may be practiced without such details. In other instances, well known elements or components are described at a relatively high-level, without detail, in order to avoid unnecessarily obscuring aspects of the present teachings.

In the description of the present invention, it should be understood that, the terms "up", "down", "left", "right", "top", "bottom", etc. indicate orientation and/or location with reference to the normal or expected use, position and orientation that is intended for the corresponding feature.

In addition, the terms "first", "second" and the like are used for descriptive purposes only and must not be considered to indicate or imply relative importance or implicitly indicate the quantity of technical features. Thus, a feature numbered with "first" or "second" may explicitly or implicitly mean that one or more of the features are included.

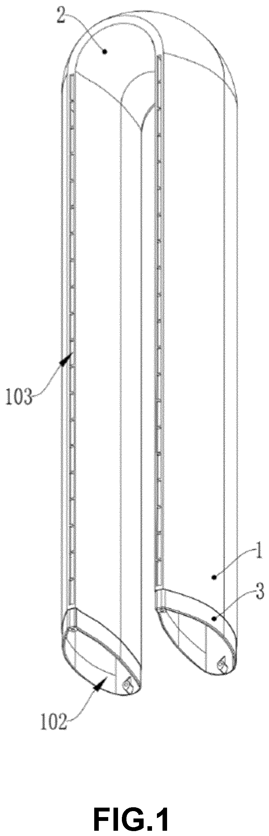

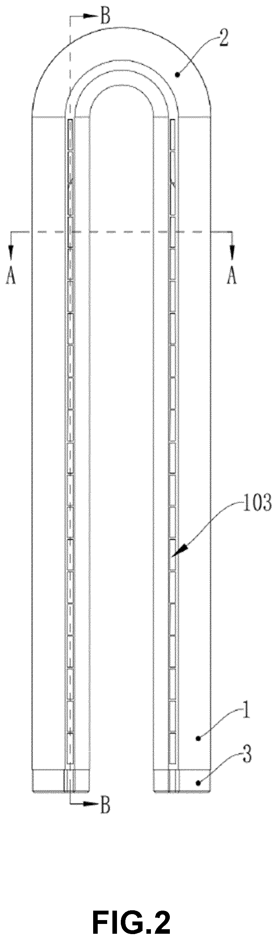

As shown in the figures 1 to 4 according to a particular embodiment, the present invention concerns a blowing structure (or blowing device) for a bladeless fan, this blowing structure comprising two air delivery ducts 1 and a connector 2. As depicted for instance in figures 1 and 2, the two air delivery ducts 1, also called first and second air delivery ducts 1, are symmetrically arranged on two bottom ends of the connector 2

More particularly, in the present example, the connector 2 is configured to connect (or secured) together the two air delivery ducts 1. The connector may have various configurations of terms of shape, size, etc. As shown in the example of figures 1 and 2, the connector 2 can have a curved U-shape with two bottom ends, i.e. a first bottom end connected (or secured) to a first air delivery duct 1 and a second bottom end connected (or secured) to a second air delivery duct 1. The first and second air delivery ducts 1 are arranged symmetrically one with respect to the other.

The first and second air delivery ducts 1 have dolphin-like outer contour. In other words, the two air delivery ducts 1 are distinct parts with inner and outer contours (or outer surfaces, or outer outlines). The outer contours (or outer surfaces, or outer sides) of the air delivery ducts 1 have a dolphin-like shape (or dolphin-like profile). A dolphin-like shape or dolphin-like profile refers to the shape or profile of the outer surfaces of the two air delivery ducts 1, these outer surfaces resembling (or imitating, or having the geometrical shape and proportions) of the streamlined and smooth silhouette of a dolphin. In particular, the outer contour of each air delivery duct 1 has the same configuration in terms of shape and dimensional proportions as a dolphin outer contour line.

The outer contours of the first and second air delivery ducts 1 can be defined by a gradual and continuous curvature (without sharp edges), thus promoting aerodynamic efficiency and minimizing air resistance. The front portion typically of the delivery ducts 1 may taper gently to form a rounded nose or leading edge, while the body broadens and then tapers again towards the rear, imitating the natural flow and curvature of a dolphin's body. This design aims to enhance airflow characteristics, reducing turbulence and improving the overall performance of the bladeless fan.

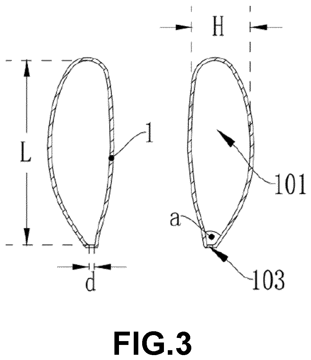

Each air delivery duct 1 is provided with an internal air chamber 101, a bottom air inlet 102 and a side-wall air slot 103, wherein the air inlet 102, the air chamber 101 and the air slot 103 are connected to each other. As shown for instance in figures 3-4, each internal air chamber 101 forms a cavity. The air inlet 102 and air slot 103 of each air delivery duct 1 are connected via the corresponding internal air chamber.

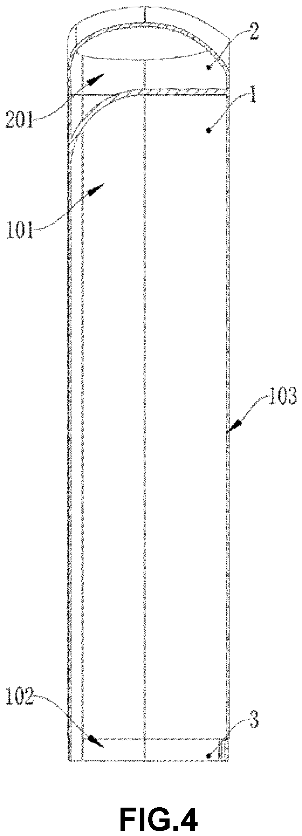

As shown for instance in figures 3 and 4, the respective air inlet 102, positioned at the bottom of each air delivery duct 1, is configured to let air (or an air flow) enter into the air chamber 101 of the corresponding delivery duct 1. The side-wall air slot of each delivery air duct 1 is configured to let air (or an air flow) flow (or circulate) from the corresponding air chamber 101 to the outside of the blowing structure. Air can thus circulate from the air inlet 102 to the air slot 103, and outside, via each air chamber 101.

In order to reduce the aerodynamic noise of the air delivery ducts and the turbulence of the air outlet and improve the user experience, the present invention provides a blowing structure suitable for a bladeless fan, as shown in Figs. 1-4 according to particular embodiments. The blowing structure comprises a pair of supply air ducts 1 having each a dolphin-like shape, and also comprises a connector 2 for connecting the two supply air ducts 1. During operation of the blowing structure according to the present embodiment of the invention, the air can be squeezed from the fan (not shown in the figure) to the air chamber 101 of the air delivery ducts1 through the air inlet 102, and then sent out through the air slot on the side wall of the air delivery ducts1.

Specifically, the air delivery ducts 1 have dolphin-shaped outer outline, which can advantageously reduce the aerodynamic noise of the air delivery ducts and the airstream turbulence at the air outlets by weakening the pressure pulsation and turbulent pulsation on the surface of the air delivery ducts 1 and at the air outlets, and the interference impact between the internal outlet air flow and the external inlet air flow.

In a particular example, the air chamber 101 of each air delivery duct 1 has the maximum length of L and the maximum width of H, with the relationship between L and H:

$$0.2 \leq H/L \leq 0.5$$

In other terms, a maximum length L and a maximum width H of the air chamber of each air delivery duct 1 satisfy the following relationship: $0.2 \leq H/L \leq 0.5$

The ratio of maximum width to maximum length of each air chamber 101 may thus be optimized to achieve more stable flow by the rectification of the air flow in the air chamber 101 for a long enough time, and avoid the flow loss caused by more vortex.

As already described, each air delivery duct 1 comprises a side-wall air slot 103 connected to the corresponding internal air chamber 101 to let air circulate out of the blowing structure. The air slots are positioned on one side (or one edge) of each air delivery duct 1. In a particular example, each air delivery duct 1 for a front edge comprising the respective side-wall air slot 103 (see figures 1, 2 and 3). The edge (or side, or contour, or end) comprising the air slot 103 for each air delivery duct 1 is called the edge with the air slot.

In a particular example, each air delivery duct 1 forms (or defines) an edge (or side, or end, or contour) comprising a respective air slot 103, wherein said edge with the air slot defines an angle (or included angle) with a range of 4° to 20°.

The included angle defined by the edge with the air slot of each air delivery duct 1, as shown in Fig.3, can thus be optimized to further reduce the turbulence noise of the air slot by more uniformly accelerating the air flow in the air chamber 101, and reducing the turbulence of the air slot.

In a particular example, the air slot of each air delivery duct 1 is 5-20 mm wide (i.e. comprised within the range of 5 to 20 mm), thereby allowing for an efficient air flow with reduced air turbulence and limited noise.

The width noted d (figure 3) of the air slot of each air delivery duct 1 can thus be optimized to reduce the turbulent noise of the air slot on the premise of ensuring the outlet air volume.

In a particular example, the blowing structure further comprises a plurality of air guide plates (or air guide elements) that are separately installed in the air slot in vertical direction to divide the air slot into a plurality of air outlets 103. As shown in figures 1 and 2, the air guide plates may extend vertically across each air slot 103 to define a plurality of vertically-distributed air outlets 103.

A plurality of air guide plates are installed in the air slot to divide the air slot into a plurality of air outlets 103 so that the more even blowing is achieved by the blowing structure.

In a particular example, the cross-sectional area of each internal air chamber 101 in horizontal direction is configured so that it vertically decreases from bottom to top.

In order to achieve uniform air velocity in each air delivery duct 1 and limit or prevent energy loss caused due to speed change, the cross section area of each internal air chamber 101 can thus be optimized.

In a particular example, the blowing structure further comprises two mounting parts 3 configured to connect the blowing structure to a fan (not shown), wherein each one of said mounting parts 3 is installed at the bottom of a respective one of the air delivery ducts 1. In this way, a fan can be coupled the air inlet 102 of each air delivery duct 1 through the respective mounting part 3.

The mounting parts 3 installed on the blowing structure according to a particular embodiment of the invention may advantageously facilitate installation, and removal, of the blowing structure relative to a fan.

In a particular example, the air delivery duct 1, the connector 2 and the mounting part 3 are integrated.

In a particular example, a weight reducing chamber 201 is formed in the connector 2. As shown in figure 4, the connector 2 may comprise an internal chamber 201 that allow weight reduction.

In order to reduce the weight of the blowing structure, the connector 2 can thus be designed as a hollow structure to advantageously facilitate the movement and installation of the blowing structure.

The present invention also provides a bladeless fan (or fan system) comprising a fan and the above-described blowing structure, wherein the one or more outlets of the fan are connected to the air inlets 102 of the blowing structure. The fan can thus be connected to, or coupled with, the air inlet of at least (or both) of the respective air inlets of the two air delivery ducts 1, thereby allowing air to be blown by the fan into the internal air chambers 101 of the air delivery ducts 1.

It is noted that the terms are used here only to describe embodiments and not intended to limit embodiments under this specification. For the purpose of this specification, unless specifically stated otherwise, the singular is also intended to include the plural, vice versa. It should also be understood that the terms "comprise" and/or "comprising" are used in this specification to indicate the existence of features, steps, operations, devices, components and/or their combinations.

Unless specifically stated otherwise, the relative arrangement, numerical expression and numerical value used to describe the components and steps in these embodiments do not limit the scope of the present invention. At the same time, it should be understood that the parts dimensions shown in the figure are provided for the purpose of description, and not provided according to the actual scale. The techniques, methods and equipment known to those skilled in the art may not be discussed in detail, but where appropriate, such techniques, methods and equipment shall be considered a part of this specification. In all embodiments provided and discussed here, any specific value should be only interpreted as exemplary and not as a limitation. Therefore, other exemplary embodiments may have different values. It should be noted that similar number and letters indicate similar items in the figures. Therefore, once a term is defined in one of the figures, it is not required to discuss the item further in other figures.

For convenience of illustration, spatial relative terms such as "in", "above", "on surface", "upper", etc., can be used here to describe the spatial position relationship between a device or feature and other devices or features as shown in the figures. It should be understood that spatial relative terms are intended to include different orientations in use or operation of the device other than those described in the figures. For example, if a device is inverted in the figure, the device "below" or "under" another device or structure will later be positioned as "below" or "under" another device or structure. Thus, the exemplary term "above" can include "above" and "below". The device can also be positioned in different ways (rotated 90 degrees or in other directions), and the relative description of space used here is explained accordingly.

In addition, it should be noted that "first", "second" and other words are used to define the parts only for the purpose of distinguishing the corresponding parts. Unless otherwise stated, the above words have no special meaning, and therefore they cannot be understood to limit the protection scope of the present invention.

It should be noted that the terms "first", "second", etc. are used in the specification and claims and futures of this application to distinguish similar objects and are not intended to describe a particular order or sequence. It should be understood that the data used in this way are interchangeable where appropriate so that the embodiments described herein can be implemented in the order other than those illustrated or described herein.

The technical principle of the present invention is described above by specific embodiments. These descriptions are intended only to explain the principles of the present invention and should not in any way be interpreted as limiting the protection scope of the present invention. Based on the explanation provided herein, those skilled in the art may think of other modes of carrying out the present invention without creative labor, which will fall within the protection scope of the present invention.

**Claims**

1. A blowing structure comprising two air delivery ducts (1) and a connector (2), wherein the two air delivery ducts are symmetrically arranged at two bottom ends of the connector;

   wherein the air delivery ducts have dolphin-like outer contour;
   each air delivery duct being provided with an internal air chamber (101), a bottom air inlet and a side-wall air slot (103), wherein the air inlet, the air chamber and the air slot are connected to each other.

2. The blowing structure according to Claim 1, wherein a maximum length L and a maximum width H of the internal air chamber of each air delivery duct satisfy the following relationship: $0.2 \leq H/L \leq 0.5$

3. The blowing structure according to Claim 1 or 2, wherein each air delivery duct form an edge comprising the respective air slot, said edge with the air slot defining an included angle within a range of 4° to 20°.

4. The blowing structure according to any one of the preceding Claims, wherein the air slots are 5-20 mm wide.

**5.** The blowing structure according to any one of the preceding Claims, further comprising a plurality of air guide plates that are separately installed in the air slot in vertical direction to divide the air slot into a plurality of air outlets.

**6.** The blowing structure according to any one of the preceding Claims, wherein the cross-sectional area of the air chamber in horizontal direction is vertically decreased from bottom to top.

**7.** The blowing structure according to any one of the preceding Claims, further comprising two mounting parts configured to connect the blowing structure to a fan, each one of said mounting parts being installed at the bottom of a respective one said air delivery ducts.

**8.** The blowing structure according to any one of the preceding Claims, wherein the air delivery duct, the connector and the mounting part are integrated.

**9.** The blowing structure according to any one of the preceding Claims, wherein a weight reducing chamber is formed in the connector.

**10.** A bladeless fan comprising a fan and the blowing structure according to any of Claims 1-9, wherein the outlet of the fan is connected to the air inlet of the blowing structure.

**Amended claims in accordance with Rule 137(2) EPC.**

**1.** A blowing structure comprising two air delivery ducts (1) and a connector (2), wherein the two air delivery ducts are symmetrically arranged at two bottom ends of the connector;

> wherein the air delivery ducts have dolphin-like outer contour;
> each air delivery duct being provided with an internal air chamber (101), a bottom air inlet (102) and a side-wall air slot (103), wherein the air inlet, the air chamber and the air slot are connected to each other;
> wherein a maximum length L and a maximum width H of the internal air chamber of each air delivery duct satisfy the following relationship: $0.2 \leq H/L \leq 0.5$.

**2.** The blowing structure according to Claim 1, wherein each air delivery duct form an edge comprising the respective air slot, said edge with the air slot defining an included angle within a range of 4° to 20°.

**3.** The blowing structure according to Claim 1 or 2, wherein the air slots are 5-20 mm wide.

**4.** The blowing structure according to any one of the preceding Claims, further comprising a plurality of air guide plates that are separately installed in the air slot in vertical direction to divide the air slot into a plurality of air outlets (103).

**5.** The blowing structure according to any one of the preceding Claims, wherein the cross-sectional area of the air chamber in horizontal direction is vertically decreased from bottom to top.

**6.** The blowing structure according to any one of the preceding Claims, further comprising two mounting parts (3) configured to connect the blowing structure to a fan, each one of said mounting parts being installed at the bottom of a respective one said air delivery ducts.

**7.** The blowing structure according to any one of the preceding Claims, wherein the air delivery duct, the connector and the mounting part are integrated.

**8.** The blowing structure according to any one of the preceding Claims, wherein a weight reducing chamber (201) is formed in the connector.

**9.** A bladeless fan comprising a fan and the blowing structure according to any of Claims 1-8, wherein the outlet of the fan is connected to the air inlet (102) of the blowing structure.

**FIG.1**

# FIG.2

**FIG.3**

**FIG.4**

Europäisches
Patentamt
European
Patent Office
Office européen
des brevets

## EUROPEAN SEARCH REPORT

Application Number

EP 24 20 9069

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 209 164 050 U (HU HUI) 26 July 2019 (2019-07-26) | 1-4,7-10 | INV. F04F5/16 |
| Y | * figures 1-3 * | 5,6 | F04D25/08 F04D29/52 |
| X | CN 210 240 142 U (YING QIAOYU) 3 April 2020 (2020-04-03) | 1-4,7,8, 10 | |
| Y | * figure 1 * | 5,6 | |
| Y | CN 116 906 379 A (GREE ELECTRIC APPLIANCES INC ZHUHAI) 20 October 2023 (2023-10-20) * figures 1-3 * | 5,6 | |
| A | US 2012/318393 A1 (TSEN SAMSON [TW]) 20 December 2012 (2012-12-20) * the whole document * | 1-10 | |

TECHNICAL FIELDS
SEARCHED (IPC)

F04F
F04D

The present search report has been drawn up for all claims

| Place of search | Date of completion of the search | Examiner |
|---|---|---|
| Munich | 3 December 2024 | Olona Laglera, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 9069

This annex lists the patent family members relating to the patent documents cited in the above-mentioned European search report.
The members are as contained in the European Patent Office EDP file on
The European Patent Office is in no way liable for these particulars which are merely given for the purpose of information.

03-12-2024

| Patent document cited in search report | | Publication date | Patent family member(s) | | Publication date |
|---|---|---|---|---|---|
| CN 209164050 | U | 26-07-2019 | NONE | | |
| CN 210240142 | U | 03-04-2020 | CN | 210240142 U | 03-04-2020 |
| | | | CN | 210461202 U | 05-05-2020 |
| | | | CN | 210949298 U | 07-07-2020 |
| CN 116906379 | A | 20-10-2023 | NONE | | |
| US 2012318393 | A1 | 20-12-2012 | TW | M416690 U | 21-11-2011 |
| | | | US | 2012318393 A1 | 20-12-2012 |

EPO FORM P0459

For more details about this annex : see Official Journal of the European Patent Office, No. 12/82